# FASCICULE DE BREVET EUROPEEN

(11) **EP 0 716 274 B1**
(45) Date de publication et mention de la délivrance du brevet: **27.10.1999**
(21) Numéro de dépôt: 95402739.7
(22) Date de dépôt: 05.12.1995
(51) Int. Cl.: F24F 3/16

(54) **Procédé et dispositif pour la préparation d'air de qualité médicale**
Verfahren und Vorrichtung zur Aufbereitung von Luft medizinischer Qualität
Process and device for preparing air of medical quality

(30) Priorité: 06.12.1994 FR 9414663
(43) Date de publication de la demande: 12.06.1996
(73) Titulaire: AIR LIQUIDE SANTE-FRANCE, 75007 Paris (FR)
(72) Inventeur: Bruel, Jean, F-91370 Verrieres le Buisson (FR); Boeuf, Bernard, F-13480 Cabries (FR)
(74) Mandataire: Le Moenner, Gabriel

(56) Documents cités:
- DE-A- 3 003 413
- GB-A- 944 669
- US-A- 2 882 244
- US-A- 4 780 277
- PATENT ABSTRACTS OF JAPAN vol. 18 no. 647 (C-1283) ,8 Décembre 1994 & JP-A-06 253682 (KANEBO LTD) 13 Septembre 1994,
- PATENT ABSTRACTS OF JAPAN vol. 17 no. 462 (C-1101) ,24 Août 1993 & JP-A-05 111618 (MITSUI TOATSU CHEM INC) 7 Mai 1993,

## Description

La présente invention concerne un procédé et un dispositif pour la préparation d'air de qualité médicale à partir d'un flux d'air atmosphérique. L'air de qualité médicale est un gaz couramment utilisé en milieu hospitalier. Cet air est habituellement utilisé sous pression, notamment dans les blocs opératoires et dans les salles de réanimation en tant que gaz d'assistance respiratoire. L'air de qualité médicale peut être également utilisé en tant que source d'énergie pneumatique pour des appareils pneumatiques mis en oeuvre dans les blocs opératoires. Il peut encore être utilisé dans de nombreuses applications du domaine médical, comme la pressurisation des caissons hyperbares.

Cet air de qualité médicale est préparé à partir d'air atmosphérique. Celui-ci comporte de nombreux polluants qu'il convient d'éliminer. Ces polluants sont essentiellement des particules en suspension, la vapeur d'eau et, en plus faible concentration, le dioxyde de carbone (CO₂), le monoxyde de carbone (CO), les oxydes d'azote (NO_{X}) et le dioxyde de soufre (SO₂). Par ailleurs, l'air étant pressurisé par un compresseur, d'autres polluants peuvent s'adjoindre. Ces polluants sont essentiellement des gouttelettes d'huile générées par les compresseurs lubrifiés à l'huile.

La pharmacopée française fixe les normes admissibles en ces polluants dans de l'air de qualité médicale. Selon cette pharmacopée, la concentration en vapeur d'eau doit être inférieure à 0,09 g/m³ à la pression atmosphérique et à 0°C. Dans ces mêmes conditions de pression et de température, la concentration en dioxyde de carbone doit être inférieure à 350 ppm (parties par million en volume), la concentration en monoxyde de carbone doit être inférieure à 5 ppm, la concentration en SO₂ doit être inférieure à 16.10⁻³ ppm, et la concentration en monoxyde et dioxyde d'azote (NO_{X}) doit être inférieure à 25,5.10⁻³ ppm.

Les huiles et les particules en suspension peuvent être éliminées de l'air atmosphérique servant à préparer l'air de qualité médicale au moyens de charbons actifs et de filtres, cela de manière connue. Le CO₂ et les impuretés H₂O, SO₂ et NO_{X} sont habituellement éliminés de l'air atmosphérique au moyen d'adsorbants du type zéolithe.

Généralement, l'air recueilli à la sortie du lit d'adsorbant n'est pas contrôlé en continu en vue d'en déterminer les teneurs en CO₂, CO et lesdites autres impuretés, et donc la qualité de l'air médical obtenu, ainsi que sa conformité aux normes. En pratique, on ne mesure les concentrations en ces composés que périodiquement, par exemple une fois par an, au moyen d'analyseurs mobiles que l'on déplace dans les différents hôpitaux. Il est en effet considéré que la présence permanente d'analyseurs permettant la mesure en continu de chacun desdits composés est par trop coûteuse. Par ailleurs, ces analyseurs requièrent un entretien et une remise en état fréquente, augmentant d'autant le coût d'exploitation de l'installation de préparation d'air médical.

Or, cette absence de contrôle continu de la qualité de l'air médical présente un risque certain, lorsque l'air atmosphérique permettant sa préparation comporte une teneur inhabituellement élevée en l'un desdits composés, notamment le CO, les NO_{X} et le SO₂.

Par ailleurs, le document GB- A- 944 669 décrit une méthode et un dispositif de purification de l'air vicié, celui- ci traversant une lit comprenant un adsorbant, comme par exemple un tamis moléculaire, pour l'absorption du CO₂.

C'est pour ces raisons que la Demanderesse a cherché à mettre au point un procédé et un dispositif permettant de garantir la préparation d'air de qualité médicale à partir d'air atmosphérique, dont le coût de revient et le coût d'entretien soient faibles.

L'invention concerne alors un procédé pour la préparation d'air de qualité médicale à partir d'un flux d'air atmosphérique comprenant du CO₂, le cas échéant du CO, l'une au moins des impuretés H₂O, SO_{X}, NO₂, ledit procédé étant caractérisé en ce qu'il comporte les étapes suivantes :
(a) on purifie le flux d'air atmosphérique en lui faisant traverser un lit comprenant au moins un adsorbant pour l'adsorption du CO₂ et de l'une au moins des impuretés H₂O, SO₂, NO_{X}, ledit adsorbant ayant une sélectivité d'adsorption du CO₂ inférieure à la sélectivité d'adsorption desdites impuretés ;
(b) on mesure en continu la concentration en CO₂ dans le flux d'air purifié ;
(c) on interrompt le flux d'air atmosphérique en amont dudit lit, lorsque la concentration en CO₂ mesurée à l'étape (b), atteint une valeur prédéterminée ;
(d) le cas échéant, on élimine le CO du flux d'air purifié ;
(e) on récupère l'air de qualité médicale.

La Demanderesse a en effet constaté que de tels adsorbants autorisent un passage plus rapide du CO₂ que des autres impuretés. Ainsi, la simple et unique détection du CO₂ à la sortie du lit d'adsorbant permet d'assurer la préparation d'air de qualité médicale, sans que les concentrations en les autres impuretés n'aient à être mesurées.

L'invention est à présent expliquée plus en détail au regard de la description qui suit et des dessins, sur lesquels :
- la figure 1 représente un dispositif selon l'invention comprenant un lit d'adsorbant ; et
- la figure 2 représente un dispositif selon l'invention comprenant deux lits d'adsorption en parallèle.

Les adsorbants pouvant être mis en oeuvre à l'étape a) et présentant une sélectivité d'adsorption du CO₂ inférieure à la sélectivité d'adsorption des autres impuretés, peuvent être aisément déterminés par l'homme du métier au moyen de tests classiques.

De manière particulièrement préférée, l'adsorbant mis en oeuvre dans le procédé selon l'invention est une zéolithe dont les unités tétrahédriques AlO₂ sont associées aux cations d'au moins un métal. Ce métal peut être un métal de transition tel que Ni, Co, Fe, Zn et Cr, un métal alcalin, tel que Li, Na ou K, ou un métal alcalino-terreux, tel que Ca, Mg ou Sr.

La zéolithe peut être une chabazite, une mordénite, une zéolithe A, telle une zéolithe 5A ou une zéolithe 4A, une zéolithe X, telle qu'une zéolithe 10X ou une zéolithe 13X ou une zéolithe Y. De telles zéolithes sont par exemple décrites dans les brevets US-A-2.882.244 ; US-A-3.140.932 et US-A-3.140.933. Avantageusement, ladite zéolithe présente un rapport SiO₂/Al₂O₃ inférieur ou égal à 20, de préférence compris entre 1 et 10.

Généralement, l'air atmosphérique mis en oeuvre pour préparer l'air de qualité médicale selon l'invention comporte des teneurs en CO inférieures aux normes fixées par la pharmacopée française. Toutefois, en vue d'éviter tout risque de pollution accidentelle de l'air atmosphérique par une teneur inhabituelle en CO, il est tout particulièrement souhaitable de prévoir un moyen pour éliminer le CO de l'air purifié. Un tel moyen peut consister en un lit d'hopcalite que l'on met en contact dudit air purifié. L'hopcalite est un mélange d'oxydes métalliques bien connue. Une hopcalite comprend généralement de l'oxyde de manganèse (MnO₂) et de l'oxyde cuivreux (CuO), et le cas échéant, d'autres oxydes métalliques, tels l'oxyde d'argent (Ag₂O) et l'oxyde de cobalt (Co₂O₃).

Par ailleurs, toujours dans le but d'éviter toute pollution accidentelle par du CO, il peut être avantageux de mesurer en continu la concentration en CO de l'air purifié, cela parallèlement à la mesure de la concentration en CO₂ réalisée à l'étape (b). Lorsque la concentration en CO atteint une valeur prédéterminée, là encore, le flux d'air atmosphérique doit être interrompu.

La valeur prédéterminée en CO₂ mesurée à l'étape (b), de même que la valeur prédéterminée en CO mentionnée ci-dessus, sont fonction, respectivement, de la concentration en CO₂ et de la concentration en CO autorisées dans l'air de qualité médicale. Ainsi, si l'on souhaite respecter les normes de la pharmacopée française, ladite valeur prédéterminée sera inférieure à 350 ppm, par exemple 100 ppm. Autrement dit, dès que l'on aura atteint cette valeur prédéterminée de 100 ppm de CO₂, le flux d'air atmosphérique sera interrompu.

La mesure des concentrations en CO₂ et, le cas échéant, CO, peut se faire classiquement avec des analyseurs adaptés. L'interruption du flux d'air peut se faire manuellement ou, de préférence, être asservie auxdits analyseurs de sorte que lorsque la valeur prédéterminée est atteinte, le flux d'air soit automatiquement interrompu.

Après cette interruption du flux d'air atmosphérique, on peut régénérer le lit d'adsorbant par des moyens classiques, par exemple par balayage à co-courant ou à contre-courant par un flux d'azote ou d'un mélange gazeux comprenant de l'azote et de l'hydrogène.

Selon un aspect particulièrement avantageux de la présente invention, on peut mettre en oeuvre deux lits en parallèle contenant chacun au moins un desdits adsorbants, l'un de ces lits permettant l'adsorption du CO₂ et lesdites impuretés, tandis que l'autre est régénéré. Il est ainsi possible de disposer en continu d'un lit d'adsorbant apte à produire de l'air de qualité médicale.

Le flux d'air atmosphérique traversant ledit lit d'adsorbant est généralement pressurisé à une pression comprise entre 3 et 20 bar, de préférence entre 10 et 15 bar. L'air de qualité médicale récupéré à l'étape (e) du procédé selon l'invention peut, si nécessaire, être dépressurisé à une pression qui sera fonction de son utilisation ultérieure. Ainsi, si l'air de qualité médicale doit être utilisé en assistance respiratoire, sa pression sera alors d'environ 3,5 bar. Si l'air de qualité médicale préparé doit servir de source d'énergie pneumatique pour des appareils pneumatiques dans des blocs opératoires, il sera dépressurisé à une pression d'environ 7 bar. Cette dépressurisation peut s'effectuer de manière classique, par exemple au moyen d'un détendeur.

L'air purifié à sa sortie du lit d'adsorbant peut, en fonction de la nature de l'adsorbant, comporter des concentrations en oxygène et azote différentes de l'air atmosphérique. En effet, certains adsorbants peuvent adsorber sélectivement l'oxygène ou l'azote. En vue de produire de l'air de qualité médicale présentant des teneurs en oxygène et azote égales ou sensiblement égales à celles de l'air atmosphérique, il peut être avantageux de procéder à une homogénéisation de l'air purifié à sa sortie du lit d'adsorbant. Cette homogénéisation peut se faire de manière classique au moyen d'une cuve d'homogénéisation.

En vue de préparer de l'air de qualité médicale, on procède généralement à l'élimination des polluants du type huile, et particules solides en suspension. L'élimination de ces polluants peut se faire de manière classique au moyen de filtres mécaniques ou de charbons actifs. Ces filtres peuvent être disposés en aval du lit d'adsorbant ou, de préférence, en amont de celui-ci.

On peut encore procéder à l'élimination des bactéries du flux d'air traité. Cette élimination peut être réalisée classiquement au moyen de filtres à bactéries, disposés en amont, ou de préférence en aval, dudit lit d'adsorbant.

Le procédé selon l'invention, tel que décrit ci-dessus, permet de préparer de l'air de qualité médicale à partir d'air atmosphérique de manière économique. De plus, ce procédé permet de garantir en permanence que l'air produit respecte les normes fixées par la législation.

Selon un autre aspect, l'invention concerne aussi un dispositif pour la préparation d'air de qualité médicale. Un tel dispositif comprend :
(a) au moins une enceinte 1, 1', comprenant une conduite d'amenée 2 d'air atmosphérique, une conduite de sortie 3 d'air purifié et un lit d'adsorbant 4, 4' pour l'adsorption du CO₂ et de l'une au moins des impuretés H₂O, SO₂ et NO_{X}, ledit adsorbant ayant une sélectivité d'adsorption du CO₂ inférieure à la sélectivité d'adsorption desdites impuretés ;
(b) un appareil de mesure 5 de la concentration en CO₂ dans l'air purifié, relié à ladite conduite de sortie 3 ;
(c) un compresseur 6 d'air atmosphérique connecté à l'enceinte 1, 1' par ladite conduite d'amenée 2 d'air atmosphérique ; et
(d) des moyens de commande 7, 7', permettant d'interrompre l'entrée d'air dans ladite enceinte 1, 1', quand la concentration en CO₂ mesurée par ledit appareil de mesure 5 atteint une valeur prédéterminée.

Ledit adsorbant est de préférence tel que défini plus haut.

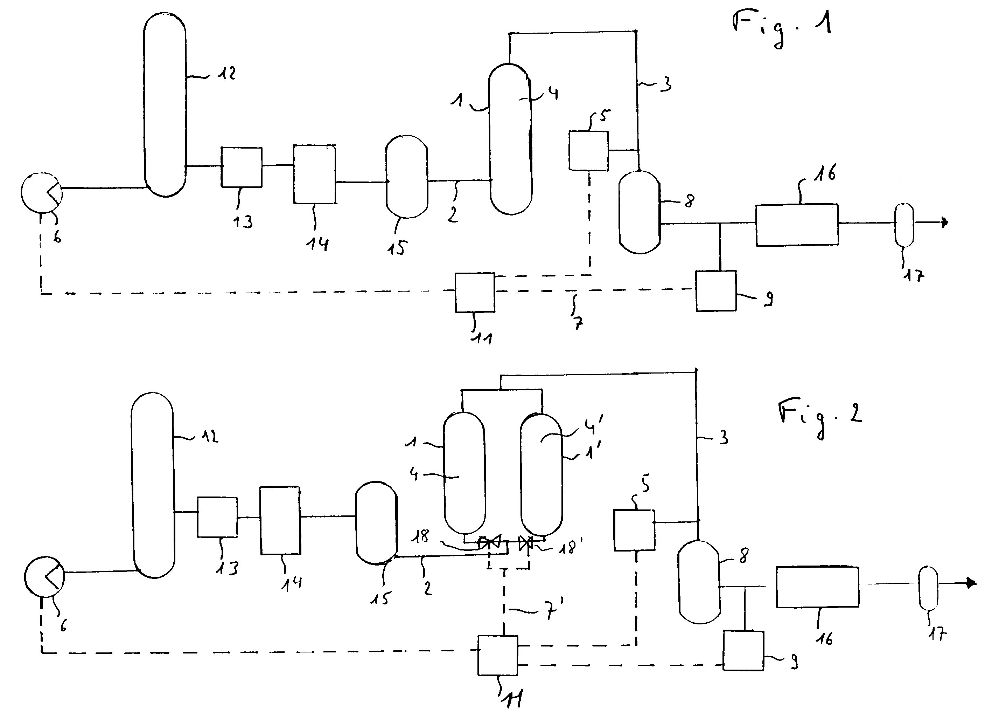

La figure 1 représente un dispositif selon l'invention comprenant un compresseur d'air atmosphérique 6 relié par la conduite d'amenée 2 d'air atmosphérique à, disposés en série et d'amont en aval, un réservoir de stockage 12, un pré-filtre 13, un filtre submicronique 14, un lit de charbon actif 15 et l'enceinte 1 comprenant un lit d'adsorbant 4. L'enceinte 1 est reliée par la conduite de sortie 3 à, disposés en série et d'amont en aval, un appareil de mesure 5 de la concentration en CO₂ dans l'air purifié, un lit 8 pour éliminer le CO, notamment un lit d'hopcalite, un appareil de mesure 9 de la concentration en CO, une cuve d'homogénéisation ou homogénéiseur 16 et enfin un filtre bactérien 17. Ce dispositif comporte également des moyens de commande 7 reliant le compresseur 6 à l'appareil de mesure 5 de la concentration en CO₂, ainsi qu'à l' appareil de mesure 9 de la concentration en CO. Ces moyens de commande 7 comprennent un microprocesseur 11 permettant d'interrompre le fonctionnement du compresseur 6 lorsque la teneur en CO₂ mesurée par l'appareil de mesure 5 ou la teneur en CO mesurée par l'appareil de mesure 9 atteignent des valeurs prédéterminées.

En fonctionnement, ce dispositif autorise la compression d'air atmosphérique au moyen du compresseur d'air 6. L'air comprimé va être stocké dans le réservoir de stockage 12. L'air sortant du réservoir de stockage 12 va être conduit par la conduite d'amenée 2 au travers du pré-filtre 13 en vue de l'élimination des particules solides dont le diamètre est supérieur à 1 micron, puis dans le filtre submicronique 14 en vue d'éliminer les particules solides dont la taille est supérieure à 0,01 µm. L'air comprimé est ensuite conduit au travers du filtre de charbon actif 15 et passe alors dans l'enceinte 1 dans laquelle les impuretés H₂O, SO₂ et NO_{X}, ainsi que le CO₂ vont être adsorbées. L'air purifié est ensuite amené par la conduite de sortie 3 dans le lit 8 d'hopcalite permettant l'élimination de toutes traces de CO pouvant être contenues dans l'air purifié. L'air purifié sortant du lit 8 d'hopcalite est conduit dans un homogénéiseur 16 qui permet de réajuster les concentrations en azote et en oxygène de l'air. A la sortie de l'homogénéiseur 16, l'air passe au travers de filtres bactériens avant d'être conduit au poste d'utilisation (non représenté).

Lorsque l'appareil de mesure 5 détecte une concentration en CO₂ supérieure à une valeur prédéterminée, le microprocesseur 11 autorise l'arrêt du fonctionnement du compresseur 6. En variante, on peut envoyer l'air atmosphérique comprimé directement à l'atmosphère et non plus vers l'enceinte 1.D'autres moyens permettant d'interrompre l'entrée d'air dans l'enceinte 1 peuvent être facilement envisagés par l'homme du métier. Lorsque l'appareil de mesure 9 détecte une concentration en CO supérieure à une valeur prédéterminée, le microprocesseur 11 permet là encore d'interrompre l'entrée d'air dans l'enceinte 1.

La figure 2 est une variante du dispositif selon l'invention comportant deux enceintes 1, 1', montées en parallèle, reliées par la conduite d'amenée 2 d'air atmosphérique, au compresseur 6. Le lit d'adsorbant 4 de l'une de ces enceintes 1 est mis en oeuvre pour l'adsorption du CO₂ et de l'une au moins desdites impuretés, alors que le lit d'adsorbant 4 de l'autre enceinte 1' est régénéré. Les moyens autorisant cette régénération ne sont pas représentés.

Ce dispositif comporte en outre des moyens de commande 7' pour interrompre l'entrée d'air atmosphérique comprimé dans l'enceinte 1, lorsque la teneur en CO₂ mesurée par l'appareil de mesure 5, ou la teneur en CO mesurée par l'appareil de mesure 9, atteignent des valeurs prédéterminées.

Les moyens de commande 7' permettent également de connecter le compresseur 6 à l'enceinte 1' dont le lit d'adsorbant 4' a été régénéré.

Les moyens de commande 7' consistent essentiellement en un microprocesseur 11 et en des électrovannes 18 et 18'.

Ce dispositif peut être mis en oeuvre de façon similaire au dispositif de la figure 1. Toutefois, lorsque l'appareil de mesure 5 détecte une concentration en CO₂ supérieure à une valeur prédéterminée, le microprocesseur 11 autorise la fermeture de l'électrovanne 18, de sorte à interrompre l'entrée d'air atmosphérique dans l'enceinte 1. Simultanément, le microprocesseur 11 permet l'ouverture de l'électrovanne 18'. L'air atmosphérique comprimé est alors dirigé dans l'enceinte 1' où les impuretés H₂O, SO₂ et NO_{X}, ainsi que le CO₂ sont adsorbées. Parallèlement, de l'azote est envoyé à contre-courant dans le lit d'adsorbant 4 de l'enceinte 1, en vue de le régénérer.

Lorsque l'appareil de mesure 5 détecte une concentration en CO₂ dans l'air sortant de l'enceinte 1', supérieure à la valeur prédéterminée, le microprocesseur autorise cette fois la fermeture de l'électrovanne 18' et l'ouverture de l'électrovanne 18.

Lorsque l'appareil de mesure 9 mesure une concentration en CO dans l'air purifié supérieure à une valeur prédéterminée, le microprocesseur 11 autorise l'arrêt du compresseur 6.

Selon une variante, le dispositif selon l'invention ne comporte qu'un seul appareil de mesure permettant de mesurer la concentration en CO₂ et en CO. Un tel appareil de mesure est de préférence disposé en aval dudit lit pour éliminer le CO.

L'exemple qui suit a pour but d'illustrer la présente invention :

On prépare de l'air de qualité médicale à partir d'air atmosphérique selon le procédé de l'invention au moyen du dispositif de la figure 1. Le compresseur 6 mis en oeuvre est un compresseur bi-étagé, à piston lubrifié de débit unitaire 53 Nm³/h. L'enceinte 1 comporte un lit d'adsorbant constitué par des zéolithes MOLSIV® type 13X APG se présentant sous la forme de billes de 8 x 12 (commercialisées par la société UOP). La composition chimique de cette zéolithe est Na₈₆ [(AlO₂)₈₆ (SiO₂)₁₀₆].XH₂O.

Ce dispositif comporte un lit 8 pour éliminer le CO, consistant en un lit d'hopcalite. Le monoxyde de carbone est dosé en continu par un analyseur utilisant la méthode électrochimique. Le dioxyde de carbone est mesuré au moyen d'un analyseur basé sur l'absorption d'un faisceau de radiations infrarouges non dispersées. Le microprocesseur 11 est programmé pour interrompre le compresseur 6 lorsque la concentration en dioxyde de carbone mesurée par l'appareil de mesure 5 est supérieure à 100 ppm.

Afin de vérifier qu'avant d'atteindre les concentrations indiquée ci-dessus en CO₂ et CO , l'air sortant du lit 8 d'hopcalite est de l'air de qualité médicale, on a également mesuré les concentrations dans cet air en SO₂, H₂O, et NO_{X}. On a également mesuré les concentrations dans l'air atmosphérique comprimé par le compresseur 6, en chacune des impuretés H₂O, NO_{X} et SO₂ ainsi que les concentrations en CO et CO₂.

Après 9 heures de fonctionnement, l'appareil de mesure 5 a mesuré une concentration en CO₂ de 100 ppm. Le microprocesseur 11 a alors permis la déconnection du compresseur 6. Les concentrations en monoxyde de carbone, SO₂, NO_{X} et H₂O mesurées par les divers appareils de mesure montrent que l'air obtenu est de qualité médicale. En effet, les concentrations en chacun de ces composés dans l'air produit étaient toutes inférieures à celles fixées par la pharmacopée française.

Les résultats obtenus figurent au tableau 1 ci-après :

**Tableau 1:**

| Polluant | Valeur limite Norme | Air atmosphérique | Sortie lit 8 |
|---|---|---|---|
| CO₂ (ppm) | 350 | 360 à 385 | 90 |
| CO (ppm) | 5 | 1,1 à 1,4 | 0 |
| SO₂ (ppm) | 16.10⁻³ | 1 à 2.10⁻³ | 0 |
| NO_{X} (ppm) | 25,5.10⁻³ | 26 à 50.10⁻³ | 0 |
| H₂O (g/m³) | 0,09 | > 2 | 0,05 |

Au vu de ces résultats, il apparait clairement que la seule détection du CO₂ en sortie du lit d'adsorbant suffit pour la préparation d'air de qualité médicale, ce en toute sécurité pour l'utilisateur.

## Revendications

1. Un procédé pour la préparation d'air de qualité médicale à partir d'un flux d'air atmosphérique comprenant du CO₂, le cas échéant du CO, et l'une au moins des impuretés H₂O, SO₂ et NO_{X}, ledit procédé étant caractérisé en ce qu'il comporte les étapes suivantes :
(a) on purifie le flux d'air atmosphérique en lui faisant traverser un lit comprenant au moins un adsorbant pour l'adsorption du CO₂ et de l'une au moins des impuretés H₂O, SO₂ et NO_{X}, ledit adsorbant ayant une sélectivité d'adsorption du CO₂ inférieure à la sélectivité d'adsorption desdites impuretés ;
(b) on mesure en continu la concentration en CO₂ dans le flux d'air purifié ;
(c) on interrompt le flux d'air atmosphérique en amont dudit lit, lorsque la concentration en CO₂ mesurée à l'étape (b), atteint une valeur prédéterminée ;
(d) le cas échéant, on élimine le CO du flux d'air purifié ;
(e) on récupère l'air de qualité médicale.

2. Un procédé selon la revendication 1, caractérisé en ce que l'adsorbant est une zéolithe dont les unités tétrahédriques AlO₂ sont associées aux cations d'au moins un métal.

3. Un procédé selon la revendication 2, caractérisé en ce que ledit métal est un métal de transition, tel que Ni, Co, Fe, Zn et Cr, un métal alcalin, tel que Li, Na ou K, ou un métal alcalino-terreux, tel que Ca, Mg ou Sr.

4. Un procédé selon l'une des revendications 2 et 3, caractérisé en ce que ladite zéolithe est une chabazite, une mordénite, une zéolithe A, une zéolithe X ou une zéolithe Y.

5. Un procédé selon l'une des revendications 2 à 4, caractérisé en ce que la zéolithe présente un rapport SiO₂/Al₂O₃ inférieur ou égal à 20, de préférence compris entre 1 et 10.

6. Un procédé selon l'une des revendications 1 à 5, caractérisé en ce qu'on élimine le CO du flux d'air purifié par passage dudit flux sur un lit d'hopcalite.

7. Un procédé selon l'une des revendications 1 à 6, caractérisé en ce qu'on mesure en continu la concentration en CO dans ledit flux d'air purifié et on interrompt le flux d'air atmosphérique lorsque la concentration en CO mesurée atteint une valeur prédéterminée.

8. Un procédé selon l'une des revendications 1 à 7, caractérisé en ce qu'après l'étape (c), on régénère ledit adsorbant.

9. Un procédé selon l'une des revendications 1 à 8, caractérisé en ce qu'on met en oeuvre deux lits contenant chacun au moins un adsorbant, l'un de ces lits permettant l'adsorption du CO₂ et desdites impuretés, tandis que l'autre est régénéré.

10. Un procédé selon l'une des revendications 1 à 9, caractérisé en ce que le flux d'air atmosphérique traversant ledit lit est pressurisé à une pression comprise entre 3 et 20 bar, de préférence entre 10 et 15 bar.

11. Un dispositif pour la préparation d'air de qualité médicale, caractérisé en ce qu'il comprend :
(a) au moins une enceinte (1, 1'), comprenant une conduite d'amenée (2) d'air atmosphérique, une conduite de sortie (3) d'air purifié et un lit d'adsorbant (4, 4') pour l'adsorption du CO₂ et de l'une au moins des impuretés H₂O, SO₂ et NO_{X}, ledit adsorbant ayant une sélectivité d'adsorption du CO₂ inférieure à la sélectivité d'adsorption desdites impuretés ;
(b) un appareil de mesure (5) de la concentration en CO₂ dans l'air purifié relié à ladite conduite de sortie (3) d'air purifié ;
(c) un compresseur 6 d'air atmosphérique connecté à l'enceinte (1, 1') par ladite conduite d'amenée (2) d'air atmosphérique ; et
(d) des moyens de commande (7, 7') permettant d'interrompre l'entrée d'air dans l'enceinte (1, 1') quand la concentration en CO₂ mesurée par ledit appareil de mesure (5) atteint une valeur prédéterminée.

12. Un dispositif selon la revendication 11, caractérisé en ce que l'adsorbant (4, 4') est une zéolithe dont les unités tétrahédriques AlO₂ sont associées aux cations d'au moins un métal.

13. Un dispositif selon l'une des revendications 11 et 12, caractérisé en ce qu'il comprend en outre un lit (8) pour éliminer le CO, notamment un lit d'hopcalite, connecté à un ladite conduite de sortie (3) de ladite enceinte (1, 1').

14. Un dispositif selon l'une des revendications 10 à 13, caractérisé en ce qu'il comprend en outre un appareil de mesure (9) de la concentration en CO reliée à ladite conduite de sortie (3), ainsi que des moyens de commande (7) pour interrompre l'entrée d'air dans l'enceinte (1, 1'), quand une concentration prédéterminée en CO a été mesurée.

15. Un dispositif selon l'une des revendications 11 à 14, caractérisé en ce qu'il comprend des enceintes (1, 1') montées en parallèle, le lit d'adsorbant (4) de l'une de ces enceintes (1) étant mis en oeuvre pour l'adsorption du CO₂ et de l'une au moins desdites impuretés, alors que le lit d'adsorbant (4') de l'autre enceinte (1') est régénéré.

## Patentansprüche

1. Verfahren zur Herstellung von Luft medizinischer Qualität aus einem Strom atmosphärischer Luft, die CO₂ und gegebenenfalls CO sowie mindestens eine der Verunreinigungen H₂O, SO₂ und NOₓ enthält, dadurch gekennzeichnet, daß man:
(a) den Strom atmosphärischer Luft durch Hindurchleiten durch eine Schüttung mit mindestens einem Adsorptionsmittel zur Adsorption von CO₂ und mindestens einer der Verunreinigungen H₂O, SO₂ und NOₓ reinigt, wobei das Adsorptionsmittel eine geringere Adsorptionsselektivität gegenüber CO₂ als gegenüber den Verunreinigungen aufweist;
(b) die CO₂-Konzentration im Strom gereinigter Luft kontinuierlich mißt;
(c) den Strom atmosphärischer Luft vor der Schüttung unterbricht, wenn die in Schritt (b) gemessene CO₂-Konzentration einen vorbestimmten Wert erreicht;
(d) gegebenenfalls CO aus dem Strom gereinigter Luft entfernt und
(e) Luft medizinischer Qualität gewinnt.

2. Verfahren nach Anspruch 1, dadurch gekennzeichnet, daß man als Adsorptionsmittel einen Zeolith einsetzt, dessen tetraedrische AlO₂-Einheiten mit Kationen mindestens eines Metalls assoziiert sind.

3. Verfahren nach Anspruch 2, dadurch gekennzeichnet, daß es sich bei dem Metall um ein Übergangsmetall wie Ni, Co, Fe, Zn und Cr, ein Alkalimetall wie Li, Na oder K oder ein Erdalkalimetall wie Ca, Mg oder Sr handelt.

4. Verfahren nach Anspruch 2 oder 3, dadurch gekennzeichnet, daß man als Zeolith einen Chabazit, Mordenit, Zeolith A, Zeolith X oder Zeolith Y einsetzt.

5. Verfahren nach einem der Ansprüche 2 bis 4, dadurch gekennzeichnet, daß man einen Zeolith mit einem SiO₂/Al₂O₃-Verhältnis kleiner gleich 20, vorzugsweise zwischen 1 und 10, einsetzt.

6. Verfahren nach einem der Ansprüche 1 bis 5, dadurch gekennzeichnet, daß man den Strom gereinigter Luft zur Entfernung von CO über eine Schüttung von Hopcalit leitet.

7. Verfahren nach einem der Ansprüche 1 bis 6, dadurch gekennzeichnet, daß man die CO-Konzentration im Strom gereinigter Luft kontinuierlich mißt und den Strom atmosphärischer Luft unterbricht, wenn die gemessene CO-Konzentration einen vorbestimmten Wert erreicht.

8. Verfahren nach einem der Ansprüche 1 bis 7, dadurch gekennzeichnet, daß man das Adsorptionsmittel nach Schritt (c) regeneriert.

9. Verfahren nach einem der Ansprüche 1 bis 8, dadurch gekennzeichnet, daß man zwei Schüttungen verwendet, die jeweils mindestens ein Adsorptionsmittel enthalten, wobei eine der Schüttungen die Adsorption von CO₂ und den Verunreinigungen gestattet, während die andere regeneriert wird.

10. Verfahren nach einem der Ansprüche 1 bis 9, dadurch gekennzeichnet, daß man den durch die Schüttung hindurchgehenden Strom atmosphärischer Luft auf einen Druck zwischen 3 und 20 bar, vorzugsweise zwischen 10 und 15 bar, bringt.

11. Vorrichtung zur Herstellung von Luft medizinischer Qualität, dadurch gekennzeichnet, daß sie enthält:
(a) mindestens eine Kammer (1, 1') mit einer Leitung (2) zur Zuführung von atmosphärischer Luft, einer Leitung (3) zum Abführen von gereinigter Luft und eine Adsorptionsmittelschüttung (4, 4') zur Adsorption von CO₂ und mindestens einer der Verunreinigungen H₂O, SO₂ und NOₓ, wobei das Adsorptionsmittel eine geringere Adsorptionsselektivität gegenüber CO₂ als gegenüber den Verunreinigungen aufweist;
(b) ein mit der Leitung (3) zum Abführen von gereinigter Luft verbundenes Gerät (5) zur Messung der CO₂-Konzentration im Strom gereinigter Luft;
(c) einen Verdichter (6) für atmosphärische Luft, der mit der Kammer (1, 1') über die Leitung (2) zur Zuführung von atmosphärischer Luft verbunden ist;
(d) Steuermittel (7, 7'), die die Unterbrechung des Eintritts von Luft in die Kammer (1, 1') erlauben, wenn die mit dem Meßgerät (5) gemessene CO₂-Konzentration einen vorbestimmten Wert erreicht.

12. Vorrichtung nach Anspruch 11, dadurch gekennzeichnet, daß es sich bei dem Adsorptionsmittel (4, 4') um einen Zeolith handelt, dessen tetraedrische AlO₂-Einheiten mit Kationen mindestens eines Metalls assoziiert sind.

13. Vorrichtung nach Anspruch 11 oder 12, dadurch gekennzeichnet, daß sie außerdem auch noch eine Schüttung (8) zur Entfernung von CO, insbesondere eine Hopcalit-Schüttung, die mit der Abführleitung (3) der Kammer (1, 1') verbunden ist, enthält.

14. Vorrichtung nach einem der Ansprüche 10 bis 13, dadurch gekennzeichnet, daß sie außerdem auch noch ein mit der Abführleitung (3) verbundenes Gerät (9) zur Messung der CO-Konzentration sowie Steuermittel (7) zur Unterbrechung des Eintritts von Luft in die Kammer (1, 1'), wenn einen vorbestimmte CO-Konzentration gemessen worden ist, enthält.

15. Vorrichtung nach einem der Ansprüche 10 bis 14, dadurch gekennzeichnet, daß sie parallel angeordnete Kammern (1, 1') enthält, wobei die Adsorptionsmittelschüttung (4) einer der Kammern (1) zur Adsorption von CO₂ und mindestens einer der Verunreinigungen verwendet wird, während die Adsorptionsmittelschüttung (4') der anderen Kammer (1') regeneriert wird.

## Claims

1. A process for the preparation of medical-quality air from a flow of atmospheric air comprising CO₂, where appropriate CO, and at least one of the impurities H₂O, SO₂ and NOₓ, the said process being characterized in that it includes the following steps:
(a) the flow of atmospheric air is purified by passing it through a bed comprising at least one adsorbing agent for the adsorption of CO₂ and of at least one of the impurities H₂O, SO₂ and NOₓ, the said adsorbing agent having an adsorption selectivity for CO₂ which is less than the adsorption selectivity for the said impurities;
(b) the concentration of CO₂ in the flow of purified air is measured continuously;
(c) the flow of atmospheric air upstream of the said bed is interrupted when the concentration of CO₂ measured in step (b) reaches a predetermined value;
(d) where appropriate, the CO is removed from the flow of purified air;
(e) the medical-quality air is recovered.

2. A process according to Claim 1, characterized in that the adsorbing agent is a zeolite whose tetrahedral AlO₂ units are associated with the cations of at least one metal.

3. A process according to Claim 2, characterized in that the said metal is a transition metal, such as Ni, Co, Fe, Zn and Cr, an alkali metal such as Li, Na or K, or an alkaline-earth metal such as Ca, Mg or Sr.

4. A process according to either of Claims 2 and 3, characterized in that the said zeolite is a chabazite, a mordenite, a zeolite A, a zeolite X or a zeolite Y.

5. A process according to one of Claims 2 to 4, characterized in that the zeolite has an SiO₂/Al₂O₃ ratio of less than or equal to 20, preferably between 1 and 10.

6. A process according to one of Claims 1 to 5, characterized in that the CO is removed from the flow of purified air by passage of the said flow through a bed of hopcalite.

7. A process according to one of Claims 1 to 6, characterized in that the CO concentration in the said flow of purified air is measured continuously and the flow of atmospheric air is interrupted when the CO concentration measured reaches a predetermined value.

8. A process according to one of Claims 1 to 7, characterized in that, after step (c), the said adsorbing agent is regenerated.

9. A process according to one of Claims 1 to 8, characterized in that two beds are used, each containing at least one adsorbing agent, one of these beds allowing the adsorption of CO₂ and of the said impurities, while the other is regenerated.

10. A process according to one of Claims 1 to 9, characterized in that the flow of atmospheric air passing through the said bed is pressurized to a pressure of between 3 and 20 bar, preferably of between 10 and 15 bar.

11. A device for the preparation of medical-quality air, characterized in that it comprises:
(a) at least one chamber (1, 1'), comprising a conduit (2) for supplying atmospheric air, an outlet conduit (3) for removing purified air and an adsorbing bed (4, 4') for the adsorption of CO₂ and of at least one of the impurities H₂O, SO₂ and NOₓ, the said adsorbing agent having an adsorption selectivity for CO₂ which is less than the adsorption selectivity for the said impurities;
(b) a machine (5) for measuring the CO₂ concentration in the purified air, connected to the said outlet conduit (3) for removing purified air;
(c) an atmospheric air compressor (6) connected to the chamber (1, 1') via the said atmospheric air supply conduit (2); and
(d) control means (7, 7') allowing the inlet of air into the chamber (1, 1') to be interrupted when the CO₂ concentration measured by the said measuring machine (5) reaches a predetermined value.

12. A device according to Claim 11, characterized in that the adsorbing agent (4, 4') is a zeolite whose tetrahedral AlO₂ units are associated with the cations of at least one metal.

13. A device according to either of Claims 11 and 12, characterized in that it also comprises a bed (8) for removing CO, in particular a hopcalite bed, connected to the said outlet conduit (3) of the said chamber (1, 1').

14. A device according to one of Claims 10 to 13, characterized in that it also comprises a machine (9) for measuring the CO concentration connected to the said outlet conduit (3), as well as control means (7) for interrupting the inlet of air into the chamber (1, 1'), when a predetermined concentration of CO has been measured.

15. A device according to one of Claims 11 to 14, characterized in that it comprises chambers (1, 1') mounted in parallel, the adsorbing bed (4) of one of these chambers (1) being used for the adsorption of CO₂ and of at least one of the said impurities, while the adsorbing bed (4') of the other chamber (1') is regenerated.
